# EUROPÄISCHE PATENTSCHRIFT

(11) **EP 3 024 128 B1**
(45) Veröffentlichungstag und Bekanntmachung des Hinweises auf die Patenterteilung: **25.04.2018**
(21) Anmeldenummer: 14193670.8
(22) Anmeldetag: 18.11.2014
(51) Int. Cl.: H04L 29/08, H04L 12/413, G05B 19/19

(54) **Modulare Steuerung eines Linearantriebs mit Kommunikation**
Modular control system of a linear drive with communication
Commande modulaire d'un entraînement linéaire avec communication

(43) Veröffentlichungstag der Anmeldung: 25.05.2016
(73) Patentinhaber: Siemens Aktiengesellschaft, 80333 München (DE)
(72) Erfinder: Hessenauer, Jürgen, 91578 Leutershausen (DE); Jäntsch, Michael, 91052 Erlangen (DE); Spindler, Carsten, 07368 Remptendorf (DE)

(56) Entgegenhaltungen:
- EP-A2- 1 193 926
- DE-A1-102007 031 709
- DE-A1-102008 008 602

## Beschreibung

Die vorliegende Erfindung geht aus von einem Steuerverfahren für einen Linearantrieb,
- wobei mehrere sequenziell aufeinanderfolgende Abschnitte des Linearantriebs jeweils von einer dem jeweiligen Abschnitt zugeordneten Steuereinrichtung gesteuert werden,
- wobei von der jeweiligen Steuereinrichtung gesteuerte Umrichter einzeln jeweils einen Teilbereich des jeweiligen Abschnitts und in ihrer Gesamtheit den jeweiligen Abschnitt mit Strom beaufschlagen,
- wobei die Steuereinrichtungen an die von ihnen gesteuerten Umrichter jeweils neue Sollwerte vorgegeben.

Die vorliegende Erfindung geht weiterhin aus von einem Computerprogramm, das Maschinencode umfasst, der von einer Steuereinrichtung für einen Abschnitt eines Linearantriebs abarbeitbar ist, wobei die Abarbeitung des Maschinencodes durch die Steuereinrichtung bewirkt, dass die Steuereinrichtung an von ihr gesteuerte Umrichter jeweils neue Sollwerte vorgibt.

Die vorliegende Erfindung geht weiterhin aus von einer Steuereinrichtung für einen Abschnitt eines Linearantriebs, wobei die Steuereinrichtung mit einem derartigen Computerprogramm programmiert ist.

Die vorliegende Erfindung geht weiterhin aus von einem Linearantrieb,
- wobei der Linearantrieb mehrere sequenziell aufeinanderfolgende Abschnitte aufweist, die jeweils von einer dem jeweiligen Abschnitt zugeordneten Steuereinrichtung gesteuert werden,
- wobei die Steuereinrichtungen jeweils wie soeben beschrieben ausgebildet sind,
- wobei von der jeweiligen Steuereinrichtung gesteuerte Umrichter einzeln jeweils einen Teilbereich des von der jeweiligen Steuereinrichtung zugeordneten Abschnitts des Linearantriebs und in ihrer Gesamtheit den jeweiligen Abschnitt mit Strom beaufschlagen.

Aus der DE 10 2008 008 602 A1 ist ein System bekannt, bei dem jedem Abschnitt jeweils ein Umrichter und die zugehörige Umrichtersteuerung zugeordnet sind. Die unmittelbar benachbarten Abschnitten zugeordneten Steuereinrichtungen können miteinander kommunizieren. Insbesondere kann zum Zweck der Übergabe eines transportierten Elements von einem Abschnitt zum nächsten Abschnitt die eine Steuereinrichtung sich zum Master und die andere Steuereinrichtung zum Slave machen.

Das aus der DE 10 2008 008 602 A1 bekannte System arbeitet gut und flexibel. Es erfordert jedoch einen hohen Aufwand. Insbesondere ist es erforderlich, für jeden Abschnitt des Linearantriebs eine eigene Steuereinrichtung zur Verfügung zu stellen.

Im Stand der Technik ist weiterhin bekannt, eine gemeinsame Prozessoreinheit (Motorcontroller = Steuereinrichtung) vorzusehen, welche für mehrere zugeordnete Umrichter gleichzeitig deren auszugebende Spannung berechnen und diese den Umrichtern vorgeben kann. In der Regel sind die Steuereinrichtung und die von der Steuereinrichtung gesteuerten Umrichter zu einem sogenannten Mehrachs-Motorcontroller zusammengefasst. Derartige Mehrachs-Motorcontroller können eine Mehrzahl von rotatorischen oder linearen Achsen regeln, wobei jeder Achse ein Umrichter zugeordnet ist. Ein Beispiel eines derartigen Mehrachs-Controllers ist das von der Anmelderin vertriebene SINAMICS S 120-System. Die Anzahl an von dem Mehrachs-Motorcontroller steuerbaren Achsen ist begrenzt, zum Beispiel bei dem SINAMICS S 120-System auf 6 Achsen.

Es ist denkbar, die einzelnen Abschnitte von Linearantrieben mittels derartiger Mehrachs-Motorcontroller für rotatorische Antriebe zu steuern. In diesem Fall ist jedoch die Anzahl an unabhängig voneinander steuerbaren Abschnitten des Linearantriebs auf dieselbe Anzahl begrenzt. Soll der Linearantrieb in eine Anzahl an Abschnitten unterteilt werden, die größer als diese Anzahl ist, so sind mehrere Motorcontroller erforderlich. Die Kommunikation der Mehrachs-Controller erfolgt im Stand der Technik nicht direkt miteinander, sondern über eine übergeordnete Steuereinrichtung. Eine derartige Kommunikation ist in der Regel erheblich langsamer als eine direkte Kommunikation. Je nach Lage des Einzelfalls kann dies hinnehmbar sein, nachteilig sein oder schlichtweg inakzeptabel sein.
Die Aufgabe der vorliegenden Erfindung besteht darin, Möglichkeiten zu schaffen, mittels derer auf einfache und kostengünstige Weise trotz einer großen Anzahl von Abschnitten eines Linearantriebs der Linearantrieb hochdynamisch geregelt werden kann.
Die Aufgabe wird durch ein Steuerverfahren für einen Linearantrieb mit den Merkmalen des Anspruchs 1 gelöst. Vorteilhafte Ausgestaltungen des Steuerverfahrens sind Gegenstand der abhängigen Ansprüche 2 bis 9. Erfindungsgemäß wird ein Steuerverfahren der eingangs genannten Art dadurch ausgestaltet,
- dass die jeweilige Steuereinrichtung jeweils eine Mehrzahl von Umrichtern steuert und
- dass die Steuereinrichtungen mit einer Anzahl von andere Abschnitte steuernden Steuereinrichtungen über jeweilige echtzeitfähige peer-to-peer-Schnittstellen kommunizieren.
In vielen Fällen ist es ausreichend, wenn die jeweilige Steuereinrichtung über ihre jeweiligen peer-to-peer-Schnittstellen mit den die jeweils unmittelbar angrenzenden Abschnitte steuernden Steuereinrichtungen verbunden ist. In diesem Fall ist die Anzahl an Steuereinrichtungen, mit denen die jeweilige Steuereinrichtung verbunden ist, 1 oder 2. Insbesondere ist in diesem Fall die Anzahl 1 für die beiden an den Enden angeordneten Steuereinrichtungen und 2 für die anderen Steuereinrichtungen. In einer bevorzugten Ausgestaltung sind die jeweilige Steuereinrichtung und die von ihr gesteuerten Umrichter zu einer Gruppe nebeneinander angeordneter Module zusammengefasst. Dadurch ergibt sich ein besonders kompakter Aufbau.

In der Regel geben die Steuereinrichtungen die Sollwerte in einem Stromreglertakt an die Umrichter vor. Weiterhin kommunizieren die Steuereinrichtungen über die peer-to-peer-Schnittstellen in einem Kommunikationstakt miteinander. Vorzugsweise ist der Kommunikationstakt gleich dem Stromreglertakt oder ist ein ganzzahliges Vielfaches des Stromreglertakts.

Die Steuereinrichtungen können weiterhin über eine jeweilige weitere Schnittstelle mit einer übergeordneten Steuereinrichtung kommunizieren. Diese Kommunikation erfolgt in einem Steuertakt, wobei jedoch der Steuertakt größer als der Kommunikationstakt ist. Durch diese Ausgestaltung kann insbesondere eine - gegenüber dem Steuertakt - erheblich höhere Dynamik erzielt werden. Meist ist der Steuertakt sogar noch erheblich größer. Insbesondere gilt für den Quotienten von Steuertakt und Kommunikationstakt in der Regel, dass er eine Zweierpotenz (= 2^{m}) ist, wobei der Exponent m Werte von 2, 3, 4, 5 oder 6 aufweist. Der Exponent m kann auch einen noch größeren Wert aufweisen, beispielsweise 8, 9 oder 10.

Vorzugsweise arbeiten die peer-to-peer-Schnittstellen mit Ethernet-Physik. Diese Ausgestaltung ist besonders einfach und kostengünstig realisierbar.

Die Steuereinrichtungen können temporär oder permanent in einer Master-Slave-Beziehung zueinander stehen. Es ist möglich, dass eine derartige Master-Slave-Beziehung von der übergeordneten Steuereinrichtung festgelegt wird. Vorzugsweise stehen die Steuereinrichtungen jedoch aufgrund der Kommunikation der Steuereinrichtungen miteinander temporär in einer Master-Slave-Beziehung zueinander. Dies gilt insbesondere dann, wenn die Master-Slave-Beziehung zwischen zwei unmittelbar aneinander angrenzende Abschnitte steuernden Steuereinrichtungen besteht. Durch diese Ausgestaltung kann insbesondere eine Übergabe eines transportierten Elements von einem Abschnitt zum angrenzenden Abschnitt auf einfache und hochdynamische Weise realisiert werden.
Wie bereits erwähnt, ist es möglich, dass die Master-Slave-Beziehung permanent besteht. Vorzugsweise wird die Master-Slave-Beziehung jedoch nur dann eingerichtet, wenn dies erforderlich ist. Vorzugsweise ist daher vorgesehen, dass die Master-Slave-Beziehung eingerichtet wird, wenn ein mittels des Linearantriebs transportiertes Element von einem der beiden unmittelbar aneinander angrenzenden Abschnitte zu dem anderen der beiden unmittelbar aneinander angrenzenden Abschnitte transportiert wird, und dass die Master-Slave-Beziehung beibehalten wird, bis das transportierte Element von dem einen der beiden unmittelbar aneinander angrenzenden Abschnitte zu dem anderen der beiden unmittelbar aneinander angrenzenden Abschnitte transportiert ist. Danach wird die Master-Slave-Beziehung vorzugsweise so bald wie möglich wieder aufgehoben. Die Master-Slave-Beziehung wird also nur für den Zeitraum eingerichtet, in dem die Übergabe des transportierten Elements von dem einen Abschnitt zu dem anderen Abschnitt erfolgt.
Vorzugsweise erklärt sich diejenige Steuereinrichtung, aus deren Abschnitt heraus das transportierte Element in den unmittelbar angrenzenden Abschnitt transportiert wird, zum Master für die Steuereinrichtung desjenigen Abschnitts, in den das transportierte Element transportiert wird. Die andere Steuereinrichtung ist also der Slave. Diese Ausgestaltung vereinfacht den Transport des transportierten Elements.
Vorzugsweise werden mittels des Linearantriebs Werkstückträger transportiert und positioniert.
Die Aufgabe wird weiterhin durch ein Computerprogramm mit den Merkmalen des Anspruchs 10 gelöst. Vorteilhafte Ausgestaltungen des Computerprogramms sind Gegenstand der abhängigen Ansprüche 11, 12 und 13 Erfindungsgemäß wird ein Computerprogramm der eingangs genannten Art dadurch ausgestaltet, dass die Abarbeitung des Maschinencodes durch die Steuereinrichtung zusätzlich bewirkt, dass die Steuereinrichtung eine Mehrzahl von Umrichtern steuert und über eine Anzahl von echtzeitfähigen peer-to-peer-Schnittstellen mit einer Anzahl von anderen Steuereinrichtungen kommuniziert.
Vorzugsweise bewirkt die Abarbeitung des Computerprogramms durch die Steuereinrichtung auch, dass die Steuereinrichtung
- die Sollwerte in einem Stromreglertakt an die von ihr gesteuerten Umrichter vorgibt und über die peer-to-peer Schnittstellen mit der Anzahl von anderen Steuereinrichtungen in einem Kommunikationstakt kommuniziert, wobei der Kommunikationstakt gleich dem Stromreglertakt ist oder ein ganzzahliges Vielfaches des Stromreglertakts ist,
- gegebenenfalls auch über eine weitere Schnittstelle mit einer übergeordneten Steuereinrichtung in einem Steuertakt kommuniziert, wobei der Steuertakt größer als der Kommunikationstakt ist, und/oder
- aufgrund der Kommunikation mit einer der anderen Steuereinrichtungen mit dieser Steuereinrichtung temporär in einer Master-Slave-Beziehung steht.
Die Aufgabe wird weiterhin durch eine Steuereinrichtung mit den Merkmalen des Anspruchs 14 gelöst. Vorteilhafte Ausgestaltungen der Steuereinrichtung sind Gegenstand der abhängigen Ansprüche 15 und 16. Erfindungsgemäß wird eine Steuereinrichtung der eingangs genannten Art dadurch ausgestaltet,
- dass die Steuereinrichtung eine Anzahl von echtzeitfähigen peer-to-peer-Schnittstellen aufweist und
- dass die Steuereinrichtung mit einem erfindungsgemäßen Computerprogramm programmiert ist.
Vorzugsweise sind die Steuereinrichtung und die von ihr gesteuerten Umrichter zu einer Gruppe unmittelbar nebeneinander angeordneter Module zusammengefasst. Weiterhin arbeiten die peer-to-peer-Schnittstellen vorzugsweise mit Ethernet-Physik. Die Aufgabe wird weiterhin durch einen Linearantrieb mit den Merkmalen des Anspruchs 17 gelöst. Erfindungsgemäß wird ein Linearantrieb der eingangs genannten Art dadurch ausgestaltet,
- dass die Steuereinrichtungen erfindungsgemäß ausgebildet sind und
- dass die Steuereinrichtungen über ihre peer-to-peer-Schnittstellen jeweils mit einer Anzahl von andere Abschnitte steuernden Steuereinrichtungen verbunden sind.
Falls das Computerprogramm entsprechend ausgebildet ist, wird vorzugsweise - analog zum Steuerverfahren - die Master-Slave-Beziehung
- eingerichtet, wenn ein mittels des Linearantriebs transportiertes Element von einem von zwei unmittelbar aneinander angrenzenden Abschnitten zu dem anderen der beiden unmittelbar aneinander angrenzenden Abschnitte transportiert wird, und
- beibehalten, bis das transportierte Element von dem einen der beiden unmittelbar aneinander angrenzenden Abschnitte zu dem anderen der beiden unmittelbar aneinander angrenzenden Abschnitte transportiert ist.
Auch erklärt sich vorzugsweise diejenige Steuereinrichtung, aus deren Abschnitt heraus das transportierte Element in den unmittelbar angrenzenden Abschnitt transportiert wird, zum Master für die Steuereinrichtung desjenigen Abschnitts, in den das transportierte Element transportiert wird.
Vorzugsweise ist das transportierte Element als Werkstückträger zum Transportieren und Positionieren von Werkstücken ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Linearantrieb,
- FIG 2: eine Steuereinrichtung,
- FIG 3: ein Ablaufdiagramm,
- FIG 4: eine Gruppe von Modulen und
- FIG 5: ein Ablaufdiagramm.

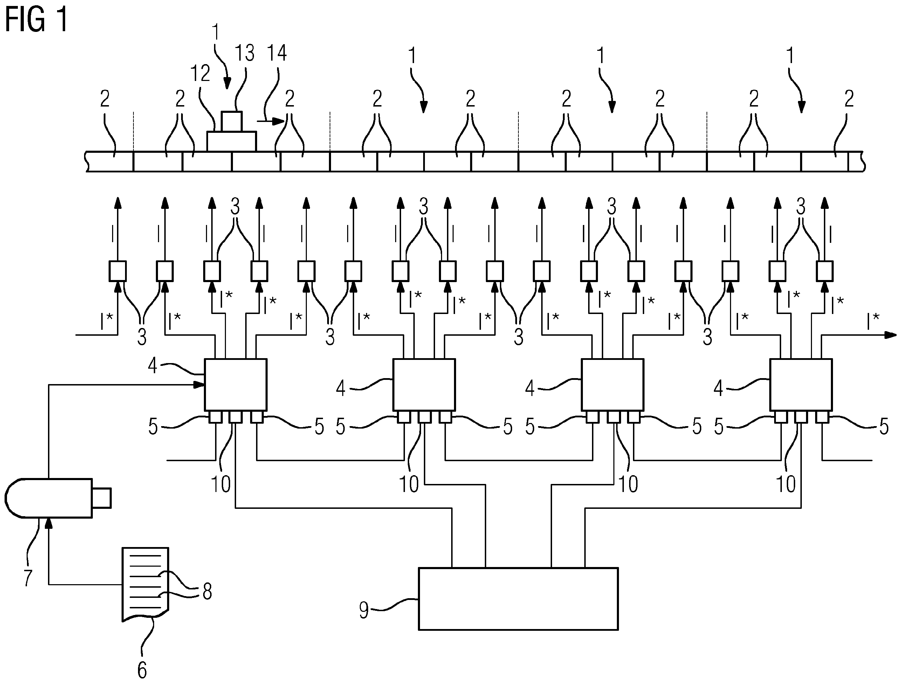

Gemäß FIG 1 weist ein Linearantrieb - genauer: der stationäre Teil des Linearantriebs bzw. das Primärteil des Linearantriebs - mehrere Abschnitte 1 auf. Die Abschnitte 1 folgen sequenziell aufeinander. Jeder Abschnitt 1 weist mehrere Teilbereiche 2 auf. Jeder Teilbereich 2 wird von einem Umrichter 3 mit Strom I beaufschlagt. Den Umrichtern 3 jedes Abschnitts 1 ist eine jeweilige Steuereinrichtung 4 zugeordnet. Die jeweilige Steuereinrichtung 4 steuert die Umrichter 3 des jeweiligen Abschnitts 1 und damit den jeweiligen Abschnitt 1. Gemäß FIG 1 steuert jede Steuereinrichtung 4 vier Umrichter 3. Diese Darstellung ist jedoch rein beispielhaft. Zum einen ist es möglich, dass die Steuereinrichtungen 4 eine größere oder kleinere Anzahl an Umrichtern 3 steuern. Zum anderen ist es möglich, dass die Anzahl an gesteuerten Umrichtern 3 von Steuereinrichtung 4 zu Steuereinrichtung 4 variiert.

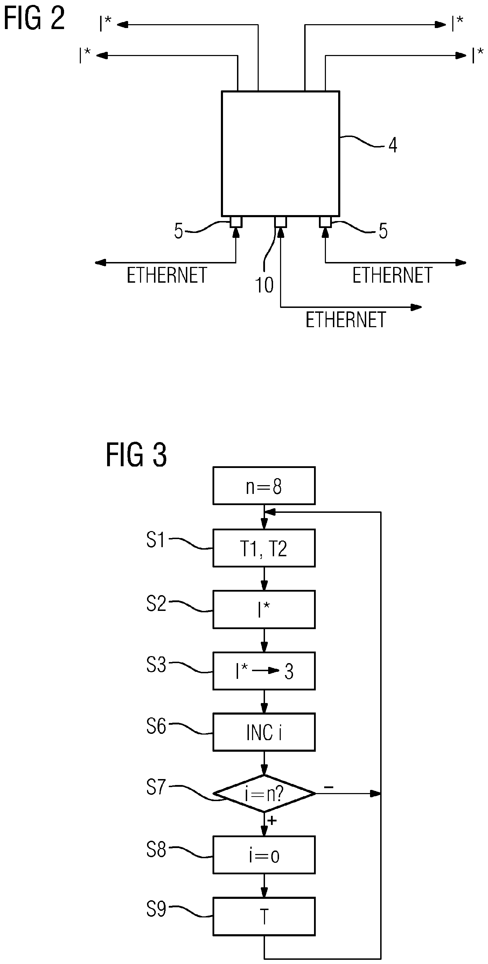

Die Steuereinrichtungen 4 weisen jeweils mindestens eine echtzeitfähige peer-to-peer-Schnittstelle 5 auf. In der Regel weisen die Steuereinrichtungen 4 jeweils mindestens zwei echtzeitfähige peer-to-peer-Schnittstellen 5 auf. Die Steuereinrichtungen 4 können auch mehr als zwei echtzeitfähige peer-to-peer-Schnittstellen 5 aufweisen. Über die peer-to-peer-Schnittstellen 5 ist jede Steuereinrichtung 4 mit einer Anzahl von Steuereinrichtungen 4 verbunden, welche andere Abschnitte 1 steuern. In der Regel ist jede Steuereinrichtung 4 mit den beiden Steuereinrichtungen 4 verbunden, welche den Abschnitt 1 unmittelbar vor und den Abschnitt 1 unmittelbar hinter dem von der jeweiligen Steuereinrichtung 4 gesteuerten Abschnitt 1 steuern. Die peer-to-peer-Schnittstellen 5 können beispielsweise entsprechend der Darstellung in FIG 2 mit Ethernet-Physik arbeiten. Eine mögliche Ausgestaltung derartiger Schnittstellen ist beispielsweise in der US 2002/0 037 007 A1 erläutert.

Die Steuereinrichtungen 4 sind - dargestellt ist dies in FIG 1 nur für eine der Steuereinrichtungen 4 - mit einem Computerprogramm 6 programmiert. Das Computerprogramm 6 kann den Steuereinrichtungen 4 beispielsweise über einen Datenträger 7 zugeführt werden. Das Computerprogramm 6 umfasst Maschinencode 8, der von der jeweiligen Steuereinrichtung 4 abarbeitbar ist. Die Abarbeitung des Maschinencodes 8 bewirkt, dass die jeweilige Steuereinrichtung 4 ein Steuerverfahren für den Linearantrieb ausführt, das nachstehend in Verbindung mit FIG 3 näher erläutert wird.

Die Darstellung in FIG 3 ist auf eine der in FIG 1 dargestellten Steuereinrichtungen 4 bezogen. Für die anderen Steuereinrichtungen 4 gelten analoge Ausführungen.

Gemäß FIG 3 kommuniziert die Steuereinrichtung 4 in einem Schritt S1 mit den beiden Steuereinrichtungen 4, welche die beiden angrenzenden Abschnitte 1 steuern, über jeweils (mindestens) ein Telegramm T1, T2. Das Telegramm T1 betrifft die Kommunikation von und zu der Steuereinrichtung 4 zum vorgeordneten Abschnitt 1 hin, das Telegramm T2 die Kommunikation von und zu der Steuereinrichtung 4 zum nachgeordneten Abschnitt 1 hin. Wenn die Steuereinrichtung 4 mit mehr als zwei anderen Steuereinrichtungen 4 kommuniziert, werden im Schritt S1 auch mit diesen Steuereinrichtungen 4 Telegramme ausgetauscht. Wenn die Steuereinrichtung 4 nur mit einer einzigen anderen Steuereinrichtung 4 kommuniziert, entfällt das Telegramm T2.

In einem Schritt S2 ermittelt die Steuereinrichtung 4 für die von ihr gesteuerten Umrichter 3 - und zwar individuell für den jeweiligen Umrichter 3 - deren jeweiligen Stromsollwert I*. In einem Schritt S3 gibt die Steuereinrichtung 4 den jeweiligen Stromsollwert I* dem jeweiligen von ihr gesteuerten Umrichter 3 vor. Der jeweilige Umrichter 3 beaufschlagt dann den entsprechenden Teilbereich 2 mit dem entsprechenden Strom I. Im Ergebnis beaufschlagen die von der jeweiligen Steuereinrichtung 4 gesteuerten Umrichter 3 somit den entsprechenden Abschnitt 1 mit Strom I.

Die Schritte S1 bis S3 sind gemäß der Darstellung in FIG 2 in eine Schleife eingebunden. Insbesondere wird die Schleife von der Steuereinrichtung 4 in einem Stromreglertakt abgearbeitet. Der Stromreglertakt liegt üblicherweise im Bereich zwischen 31,25 µs und 250 µs. Es ist jedoch auch ein anderer Stromreglertakt möglich. Gemäß FIG 2 erfolgt im Stromreglertakt nicht nur die Ermittlung der Stromsollwerte I* und deren Vorgabe an die Umrichter 3 erfolgt, sondern auch die Kommunikation der Steuereinrichtungen 4 untereinander. Gemäß FIG 2 ist ein Kommunikationstakt, in dem die Kommunikation der Steuereinrichtung 4 über die Telegramme T1, T2 erfolgt, also gleich dem Stromreglertakt. Alternativ könnte die Kommunikation der Steuereinrichtung 4 über die Telegramme T1, T2 auch in einem Kommunikationstakt erfolgen, der ein ganzzahliges Vielfaches des Stromreglertakts ist, beispielsweise das 2^{k}-fache, wobei k ein relativ niedriger Wert von beispielsweise 1, 2, 3, 4 oder 5 ist.

In vielen Fällen ist entsprechend der Darstellung in FIG 1 zusätzlich zu den Steuereinrichtungen 4 eine übergeordnete Steuereinrichtung 9 vorhanden. In diesem Fall weisen die Steuereinrichtungen 4 eine jeweilige weitere Schnittstelle 10 auf, über welche sie mit der übergeordneten Steuereinrichtung 9 kommunizieren. Die weitere Schnittstelle 10 kann - analog zu den peer-to-peer-Schnittstellen 5 - mit Ethernet-Physik arbeiten.

Die Kommunikation mit der übergeordneten Steuereinrichtung 9 erfolgt nicht im Stromreglertakt, und auch nicht im Kommunikationstakt, sondern in einem Steuertakt. Der Steuertakt ist in der Regel erheblich größer als der Kommunikationstakt, insbesondere mindestens zweimal so groß. Beispielsweise kann der Steuertakt im Bereich zwischen 0,5 ms und 16 ms liegen.

In diesem Fall kann beispielsweise die aus den Schritten S1 bis S3 bestehende Schleife um Schritte S6 und S7 ergänzt sein. Im Schritt S6 inkrementiert die Steuereinrichtung 4 einen Index i. Im Schritt S7 prüft die Steuereinrichtung 4, ob der Index i einen Endwert n erreicht hat. Wenn dies nicht der Fall ist, geht die Steuereinrichtung 4 direkt zum Schritt S1 zurück. Anderenfalls geht die Steuereinrichtung 4 über Schritte S8 und S9 zum Schritt S1 zurück. Im Schritt S8 setzt die Steuereinrichtung 4 den Index i auf den Wert 0 zurück. Im Schritt S9 erfolgt die Kommunikation mit der übergeordneten Steuereinrichtung 9, insbesondere über entsprechende Telegramme T.

Der Endwert n ist durch das Verhältnis V des Steuertakts und des Stromreglertakts zueinander bestimmt. Wenn beispielsweise der Steuertakt achtmal so groß wie der Stromreglertakt ist, weist der Endwert n entsprechend der Darstellung in FIG 2 den Wert 8 auf. Der Kommunikationstakt ist in diesem Fall beispielsweise entweder gleich dem Stromreglertakt, gleich dem Doppelten des Stromreglertakts oder gleich dem Vierfachen des Stromreglertakts. Hingegen ist er nicht gleich dem Achtfachen des Stromreglertakts oder noch größer.

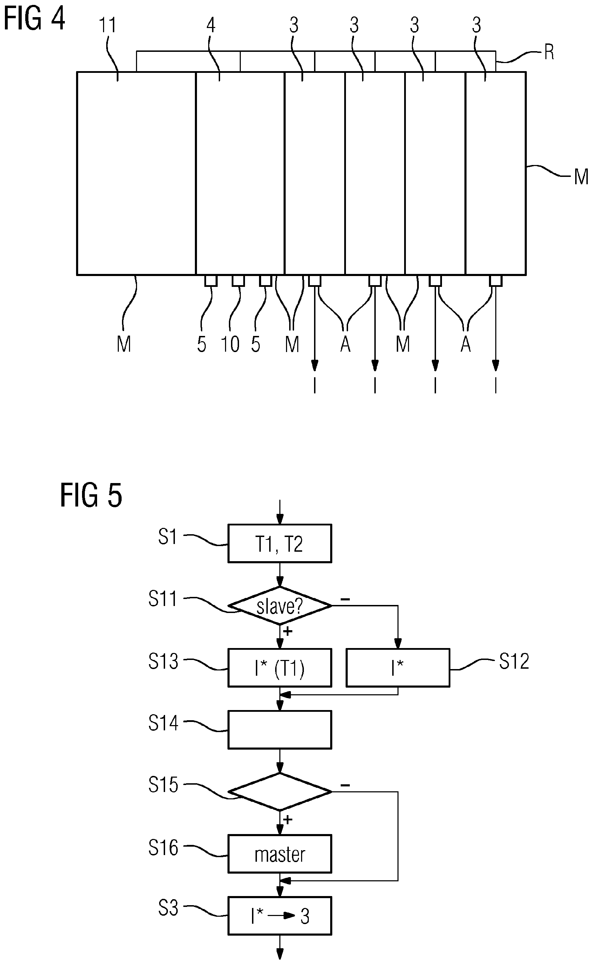

In vielen Fällen sind die jeweilige Steuereinrichtung 4 und die von ihr gesteuerten Umrichter 3 je zu einer Gruppe zusammengefasst. Zusätzlich ist oftmals eine Spannungsversorgungseinrichtung 11 vorhanden, die ebenfalls Bestandteil der jeweiligen Gruppe ist. Die Spannungsversorgungseinrichtung 11 setzt in diesem Fall eine Spannungsversorgung in eine Zwischenkreisspannung um, mit der die Umrichter 3 versorgt werden. Die Steuereinrichtung 4, die Umrichter 3 und - sofern vorhanden - die Spannungsversorgungseinrichtung 11 sind oftmals als im Wesentlichen quaderförmige Module M ausgebildet. Die Module M sind gemäß der Darstellung in FIG 4 oftmals unmittelbar nebeneinander angeordnet. Sie grenzen also aneinander an. Meist sind die Module M über einen Rückwandbus R miteinander verbunden. Über den Rückwandbus R erfolgt zum einen durch die Spannungsversorgungseinrichtung 11 die Energieversorgung der Steuereinrichtung 4 und der Umrichter 3. Zum anderen kann über den Rückwandbus R die Kommunikation zwischen der Steuereinrichtung 4 und den Umrichtern 3 erfolgen. Es sind jedoch auch andere Ausgestaltungen möglich, beispielsweise eine Kommunikation über an einer Frontseite der Module M angeordnete Schnittstellen. Die Verbindung nach außen, d.h. das Zuführen einer Einspeisung zur Spannungsversorgungseinrichtung 11, die Abgabe der Ströme I durch die Umrichter 3 und die Kommunikation der Steuereinrichtung 4 über die peer-to-peer-Schnittstellen 5 und die weitere Schnittstelle 10 erfolgen in der Regel an der Frontseite. Zur Abgabe der Ströme I weisen die Umrichter 3 oftmals vorkonfektionierte mehrpolige Anschlüsse A auf.

Im Regelfall können die Steuereinheiten 4 die von ihnen gesteuerten Abschnitte 1 unabhängig voneinander betreiben. Dies gilt auch, wenn ein mittels des Linearantriebs transportiertes und/oder positioniertes Element 12 - beispielsweise ein Werkzeugträger zum Transportieren und Positionieren von Werkstücken 13 - innerhalb eines jeweiligen Abschnitts 1 von Teilbereich 2 zu Teilbereich 2 gefördert wird. Denn innerhalb des jeweiligen Abschnitts 1 stehen der jeweiligen Steuereinrichtung 4 alle erforderlichen Informationen zur Ermittlung der Stromsollwerte I* zur Verfügung. Wenn jedoch das Element 12 vom letzten Teilbereich 2 eines Abschnitts 1 zum ersten Teilbereich 2 des angrenzenden Abschnitts 1 transportiert wird, müssen die beiden beteiligten Steuereinrichtungen 4 die Steuerung der korrespondierenden Umrichter 3 entsprechend abstimmen. Zu diesem Zweck wird vorzugsweise so vorgegangen, wie dies nachfolgend in Verbindung mit FIG 5 erläutert wird. FIG 5 ist eine mögliche Ausgestaltung der Schritte S1 bis S3 von FIG 3.

Im Rahmen der Erläuterungen zu FIG 5 wird angenommen, dass das Element 12 entsprechend dem Pfeil 14 in FIG 1 von links nach rechts transportiert wird. Weiterhin wird der Betrieb der in FIG 1 zweiten Steuereinrichtung 4 von links erläutert. Für einen Transport von rechts nach links und für die anderen Steuereinrichtungen 4 gelten analoge Ausführungen. Der kürzeren Wortwahl wegen werden weiterhin der in FIG 1 linke Abschnitt 1 und die zugehörige Steuereinrichtung 4 nachfolgend als vorderer Abschnitt und vordere Steuereinrichtung bezeichnet. Für diesen Abschnitt und diese Steuereinrichtung werden die Bezugszeichen 1a und 4a verwendet. In analoger Weise werden nachfolgend der in FIG 1 zweite Abschnitt 1 von rechts und die zugehörige Steuereinrichtung 4 als hinterer Abschnitt und hintere Steuereinrichtung bezeichnet. Für diesen Abschnitt und diese Steuereinrichtung werden die Bezugszeichen 1c und 4c verwendet. Der zweite Abschnitt 1 von links und die zugehörige Steuereinrichtung 4 werden nachfolgend als mittlerer Abschnitt und mittlere Steuereinrichtung bezeichnet. Für diesen Abschnitt und diese Steuereinrichtung werden die Bezugszeichen 1b und 4b verwendet.

Gemäß FIG 5 ist der Schritt S2 von FIG 3 durch Schritte S11 bis S13 ersetzt. Im Schritt S11 prüft die mittlere Steuereinrichtung 4b anhand des Telegramms T1, das sie von der vorderen Steuereinrichtung 4a erhalten hat, ob sie mit der vorderen Steuereinrichtung 4a in einer Master-Slave-Beziehung zueinander steht. Hierbei ist gegebenenfalls die mittlere Steuereinrichtung 4b der Slave.

Wenn die mittlere Steuereinrichtung 4b kein Slave der vorderen Steuereinrichtung 4a ist, geht die mittlere Steuereinrichtung 4b zum Schritt S12 über. Im Schritt S12 ermittelt die mittlere Steuereinrichtung 4b - so wie auch im Schritt S2 - für die von ihr gesteuerten Umrichter 3 deren jeweiligen Stromsollwert I*. Wenn die mittlere Steuereinrichtung 4b hingegen ein Slave der vorderen Steuereinrichtung 4a ist, geht die mittlere Steuereinrichtung 4b zum Schritt S13 über. Im Schritt S13 ermittelt die mittlere Steuereinrichtung 4b ebenfalls für die von ihr gesteuerten Umrichter 3 deren jeweiligen Stromsollwert I*. Im Gegensatz zum Schritt S12 berücksichtigt die mittlere Steuereinrichtung 4 im Rahmen des Schrittes S13 jedoch Vorgaben der vorderen Steuereinrichtung 4a, welche diese der mittleren Steuereinrichtung 4b im Telegramm T1 übermittelt hat. Diese Vorgaben können insbesondere eine Phaseninformation umfassen. Falls erforderlich, können die Vorgaben weitere Informationen umfassen.

Weiterhin ermittelt die mittlere Steuereinrichtung 4b in einem Schritt S14, ob und gegebenenfalls an welcher Position sich das Element 12 befindet. In einem Schritt S15 prüft die mittlere Steuereinrichtung 4b, ob das Element 12 sich in einem vordefinierten Übergabebereich zum hinteren Abschnitt 1c befindet. Es wird nochmals darauf hingewiesen, dass im Rahmen von FIG 5 vorausgesetzt wird, dass sich das Element 12 von links nach rechts bewegt.

Wenn das Element 12 sich im Übergabebereich befindet, das heißt zwar einerseits sich (zumindest teilweise) innerhalb des mittleren Abschnitts 1b befindet, aber zumindest hinreichend nahe am hinteren Abschnitt 1c angelangt ist, eventuell sogar teilweise in diesen eingetreten ist, geht die mittlere Steuereinrichtung 1b zu einem Schritt S16 über. Im Schritt S16 erklärt sich die mittlere Steuereinrichtung 4b zum Master für die hintere Steuereinrichtung 4c. Insbesondere ermittelt die mittlere Steuereinrichtung 4b im Rahmen des Schrittes S16 das Telegramm T2 zur hinteren Steuereinrichtung 4c derart, dass diese erkennt, dass sie Slave der mittleren Steuereinrichtung 4b ist. Beispielsweise kann die mittlere Steuereinrichtung 4b in dem an die hintere Steuereinrichtung 4c zu übermittelnden Telegramm T2 ein Flag setzen. Weiterhin implementiert die mittlere Steuereinrichtung 4b im Telegramm T2 an die hintere Steuereinrichtung 4c die Vorgaben, welche die hintere Steuereinrichtung 4c berücksichtigen soll und muss. Beispielsweise kann die mittlere Steuereinrichtung 4b in das Telegramm T2 eine Phaseninformation und eventuell weitere Informationen einfügen. Das entsprechende Telegramm T2 wird bei der nächsten Ausführung des Schrittes S1 von FIG 5 an die hintere Steuereinrichtung 4c übermittelt.

Wie bereits erwähnt, gelten für einen Transport von rechts nach links und für die anderen Steuereinrichtungen 4 analoge Ausführungen. Durch die obenstehend erläuterte Vorgehensweise wird daher erreicht, dass diejenige Steuereinrichtung 4, aus deren Abschnitt 1 heraus das transportierte Element 12 in den unmittelbar angrenzenden Abschnitt 1 transportiert wird, sich zum Master für die Steuereinrichtung 4 desjenigen Abschnitts 1 erklärt, in den das transportierte Element 12 transportiert wird. Weiterhin wird erreicht, dass aufgrund der Kommunikation der Steuereinrichtungen 4 miteinander diejenigen Steuereinrichtungen 4, welche zwei unmittelbar aneinander angrenzende Abschnitte 1 steuern, temporär in einer Master-Slave-Beziehung zueinander stehen. Insbesondere wird die Master-Slave-Beziehung eingerichtet, wenn ein mittels des Linearantriebs transportiertes Element 12 von einem der beiden unmittelbar aneinander angrenzenden Abschnitte 1 zu dem anderen der beiden unmittelbar aneinander angrenzenden Abschnitte 1 transportiert wird. Die Master-Slave-Beziehung wird jedoch nur so lange beibehalten, wie dies erforderlich ist. Sie wird also beibehalten, bis das transportierte Element 12 von einem der beiden unmittelbar aneinander angrenzenden Abschnitte 1 zu dem anderen der beiden unmittelbar aneinander angrenzenden Abschnitte 1 transportiert ist. Danach wird die Master-Slave-Beziehung wieder aufgehoben. Wie bereits erwähnt, sind jedoch auch andere Festlegungen einer Master-Slave-Beziehung möglich. Beispielsweise kann eine Master-Slave-Beziehung unter Umständen permanent bestehen. Auch kann eine Master-Slave-Beziehung von der übergeordneten Steuereinrichtung 9 vorgegeben und gegebenenfalls auch wieder aufgehoben werden. Auch kann eine Master-Slave-Beziehung zu einem späteren Zeitpunkt - also nicht so früh wie möglich - wieder aufgehoben werden.

In der Regel wird die vorliegende Erfindung bei einem "echten" Linearantrieb angewendet, also bei einem Linearantrieb, der zwei Endabschnitte aufweist, die an jeweils einen einzigen weiteren Abschnitt angrenzen. Wenn der Linearantrieb insgesamt mehr als zwei Abschnitte 1 aufweist, sind weiterhin zusätzlich weitere Abschnitte 1 vorhanden, die an jeweils zwei weitere Abschnitte 1 angrenzen. Die vorliegende Erfindung ist jedoch auch bei einem "unechten" Linearantrieb anwendbar. Bei einem "unechten" Linearantrieb sind die Abschnitte 1 kreisförmig gebogen und bilden zusammen einen Kreis, der seinerseits den Stator einer rotatorischen elektrischen Maschine bildet. Das transportierte bzw. positionierte Element 12 ist in diesem Fall der Rotor der elektrischen Maschine. In einem derartigen Fall ist in der Regel eine der Steuereinrichtungen 4 permanent der Master aller anderen Steuereinrichtungen 4. Der Master ist in diesem Fall in der Regel sternförmig mit den anderen Steuereinrichtungen 4 verbunden, die alle Slaves sind.

Zusammengefasst betrifft die vorliegende Erfindung somit folgenden Sachverhalt:
Mehrere sequenziell aufeinanderfolgende Abschnitte 1 eines Linearantriebs werden jeweils von einer dem jeweiligen Abschnitt 1 zugeordneten Steuereinrichtung 4 gesteuert. Von der jeweiligen Steuereinrichtung 4 gesteuerte Umrichter 3 beaufschlagen einzeln jeweils einen Teilbereich 2 des jeweiligen Abschnitts 1 und in ihrer Gesamtheit den jeweiligen Abschnitt 1 mit Strom I. Die Steuereinrichtungen 4 geben an die von ihnen gesteuerten Umrichter 3 jeweils neue Sollwerte I* vor. Die jeweilige Steuereinrichtung 4 steuert jeweils eine Mehrzahl von Umrichtern 3. Die Steuereinrichtungen 4 kommunizieren mit einer Anzahl von andere Abschnitte 1 steuernden Steuereinrichtungen 4 über jeweilige echtzeitfähige peer-to-peer-Schnittstellen 5.

Die vorliegende Erfindung weist viele Vorteile auf. Insbesondere ist auf einfache und kostengünstige Weise auch ein sich über eine größere Länge erstreckender Linearantrieb auf kostengünstige Weise realisierbar, wobei dennoch eine hochdynamische Steuerung aller Abschnitte 1 bzw. aller Teilbereiche 2 möglich ist. Das Steuerungssystem ist nach Bedarf skalierbar. Ein überlagerter Master-Controller (= übergeordnete Steuereinrichtung 9) kann zwar vorhanden sein, ist aber nicht erforderlich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuerverfahren für einen Linearantrieb,
- wobei mehrere sequenziell aufeinanderfolgende Abschnitte (1) des Linearantriebs jeweils von einer dem jeweiligen Abschnitt (1) zugeordneten Steuereinrichtung (4) gesteuert werden,
- wobei von der jeweiligen Steuereinrichtung (4) gesteuerte Umrichter (3) einzeln jeweils einen Teilbereich (2) des jeweiligen Abschnitts (1) und in ihrer Gesamtheit den jeweiligen Abschnitt (1) mit Strom (I) beaufschlagen,
- wobei die Steuereinrichtungen (4) an die von ihnen gesteuerten Umrichter (3) jeweils neue Sollwerte (I*) vorgegeben,
- die jeweilige Steuereinrichtung (4) jeweils eine Mehrzahl von Umrichtern (3) des jeweiligen Abschnitts steuert, **dadurch gekennzeichnet, dass**
- die Steuereinrichtungen (4) mit einer Anzahl von andere Abschnitten (1) steuernden Steuereinrichtungen (4) über jeweilige echtzeitfähige peer-to-peer-Schnittstellen (5) kommunizieren, und
- die Steuereinrichtungen (4) die Sollwerte (I*) in einem Stromreglertakt an die von ihnen gesteuerten Umrichter (3) vorgeben, dass die Steuereinrichtungen (4) über die peer-to-peer Schnittstellen (5) in einem Kommunikationstakt miteinander kommunizieren und dass der Kommunikationstakt gleich dem Stromreglertakt ist oder ein ganzzahliges Vielfaches des Stromreglertakts ist.

2. Steuerverfahren nach Anspruch 1
**dadurch gekennzeichnet,**
**dass** die jeweilige Steuereinrichtung (4) über ihre jeweiligen peer-to-peer-Schnittstellen (5) mit den die jeweils unmittelbar angrenzenden Abschnitte (1) steuernden Steuereinrichtungen (4) verbunden ist.

3. Steuerverfahren nach Anspruch 1 oder 2,
**dadurch gekennzeichnet,**
**dass** die jeweilige Steuereinrichtung (4) und die von ihr gesteuerten Umrichter (3) zu einer Gruppe nebeneinander angeordneter Module (M) zusammengefasst sind.

4. Steuerverfahren nach Anspruch 1,
**dadurch gekennzeichnet,**
**dass** die Steuereinrichtungen (4) über eine jeweilige weitere Schnittstelle (10) mit einer übergeordneten Steuereinrichtung (9) in einem Steuertakt kommunizieren und dass der Steuertakt größer als der Kommunikationstakt ist.

5. Steuerverfahren nach einem der obigen Ansprüche,
**dadurch gekennzeichnet,**
**dass** die peer-to-peer-Schnittstellen (5) mit Ethernet-Physik arbeiten.

6. Steuerverfahren nach einem der obigen Ansprüche,
**dadurch gekennzeichnet,**
**dass** aufgrund der Kommunikation der Steuereinrichtungen (4) miteinander zwei unmittelbar aneinander angrenzende Abschnitte (1) steuernde Steuereinrichtungen (4) temporär in einer Master-Slave-Beziehung zueinander stehen.

7. Steuerverfahren nach Anspruch 6,
**dadurch gekennzeichnet,**
**dass** die Master-Slave-Beziehung eingerichtet wird, wenn ein mittels des Linearantriebs transportiertes Element (12) von einem der beiden unmittelbar aneinander angrenzenden Abschnitte (1) zu dem anderen der beiden unmittelbar aneinander angrenzenden Abschnitte (1) transportiert wird, und dass die Master-Slave-Beziehung beibehalten wird, bis das transportierte Element (12) von dem einen der beiden unmittelbar aneinander angrenzenden Abschnitte (1) zu dem anderen der beiden unmittelbar aneinander angrenzenden Abschnitte (1) transportiert ist.

8. Steuerverfahren nach Anspruch 7,
**dadurch gekennzeichnet,**
**dass** diejenige Steuereinrichtung (4), aus deren Abschnitt (1) heraus das transportierte Element (12) in den unmittelbar angrenzenden Abschnitt (1) transportiert wird, sich zum Master für die Steuereinrichtung (4) desjenigen Abschnitts (1) erklärt, in den das transportierte Element (12) transportiert wird.

9. Steuerverfahren nach einem der obigen Ansprüche,
**dadurch gekennzeichnet,**
**dass** mittels des Linearantriebs Werkstückträger (12) transportiert und positioniert werden.

10. Computerprogramm, das Maschinencode (8) umfasst, der von einer Steuereinrichtung (4) für einen Abschnitt (1) eines Linearantriebs abarbeitbar ist, wobei die Abarbeitung des Maschinencodes (8) durch die Steuereinrichtung (4) bewirkt, dass die Steuereinrichtung (4) an von ihr gesteuerte Umrichter (3) jeweils neue Sollwerte (I*) vorgibt, eine Mehrzahl von Umrichtern (3) des jeweiligen Abschnitts steuert und über eine Anzahl von echtzeitfähigen peer-to-peer-Schnittstellen (5) mit einer Anzahl von anderen Steuereinrichtungen (4) kommuniziert, wobei die Steuereinrichtungen (4) die Sollwerte (I*) in einem Stromreglertakt an die von ihnen gesteuerten Umrichter (3) vorgeben, die Steuereinrichtungen (4) über die peer-to-peer Schnittstellen (5) in einem Kommunikationstakt miteinander kommunizieren und der Kommunikationstakt gleich dem Stromreglertakt ist oder ein ganzzahliges Vielfaches des Stromreglertakts ist.

11. Computerprogramm nach Anspruch 10,
**dadurch gekennzeichnet,**
**dass** die Abarbeitung des Maschinencodes (8) durch die Steuereinrichtung (4) bewirkt, dass die Steuereinrichtung (4) die Sollwerte (I*) in einem Stromreglertakt an die von ihr gesteuerten Umrichter (3) vorgibt, dass die Steuereinrichtung (4) über die peer-to-peer Schnittstellen (5) mit der Anzahl von anderen Steuereinrichtungen (4) in einem Kommunikationstakt kommuniziert und dass der Kommunikationstakt gleich dem Stromreglertakt ist oder ein ganzzahliges Vielfaches des Stromreglertakts ist.

12. Computerprogramm nach Anspruch 11,
**dadurch gekennzeichnet,**
**dass** die Abarbeitung des Maschinencodes (8) durch die Steuereinrichtung (4) bewirkt, die Steuereinrichtung (4) über eine weitere Schnittstelle (10) mit einer übergeordneten Steuereinrichtung (9) in einem Steuertakt kommuniziert und dass der Steuertakt größer als der Kommunikationstakt ist.

13. Computerprogramm nach Anspruch 10, 11 oder 12,
**dadurch gekennzeichnet,**
**dass** die Abarbeitung des Maschinencodes (8) durch die Steuereinrichtung (4) bewirkt, dass die Steuereinrichtung (4) aufgrund der Kommunikation mit einer der anderen Steuereinrichtungen (4) mit dieser Steuereinrichtung (4) temporär in einer Master-Slave-Beziehung steht.

14. Steuereinrichtung für einen Abschnitt (1) eines Linearantriebs,
- wobei die Beaufschlagung mit Strom (I) durch die Steuereinrichtung (4) gesteuerte Mehrzahl von Umrichtern (3) einzeln jeweils in einem Teilbereich des jeweiligen Abschnittes und in ihrer Gesamtheit des jeweiligen Abschnitt erfolgt, -wobei die Vorgabe jeweils neuer Sollwerte (I*) durch die Steuereinrichtung (4) an die von ihr gesteuerten Umrichter erfolgt, **dadurch gekennzeichnet, dass** wobei die Steuerung jeweils einer Mehrzahl von Umrichtern (3) des jeweiligen Abschnitts durch die Steuereinrichtung (4) erfolgt, - die Kommunikation der Steuereinrichtung (4) mit einer Anzahl von anderen Abschnitte steuernden Steuereinrichtungen über jeweilige echtzeitfähige peer-to-peer Schnittstellen (5) erfolgt;
- wobei die Vorgabe der Sollwerte (I*) durch die Steuereinrichtung (4) an die Steuereinrichtungen anderer Abschnitte über die echtzeitfähige peer-to-peer Schnittstelle (5) in einem Stromreglertakt an die gesteuerten Umrichter des jeweiligen Abschnitts in einem Kommunikationstakt erfolgt, der gleich dem Stromreglertakt ist oder ein ganzzahliges Vielfaches des Stromreglertakts ist.

15. Steuereinrichtung nach Anspruch 14,
**dadurch gekennzeichnet,**
**dass** die Steuereinrichtung und die von ihr gesteuerten Umrichter (3) zu einer Gruppe unmittelbar nebeneinander angeordneter Module (M) zusammengefasst sind.

16. Steuereinrichtung nach Anspruch 14 oder 15,
**dadurch gekennzeichnet,**
**dass** die peer-to-peer-Schnittstellen (5) mit Ethernet-Physik arbeiten.

17. Linearantrieb,
- wobei der Linearantrieb mehrere sequenziell aufeinanderfolgende Abschnitte (1) aufweist, die jeweils von einer dem jeweiligen Abschnitt (1) zugeordneten Steuereinrichtung (4) gesteuert werden,
- wobei von der jeweiligen Steuereinrichtung (4) gesteuerte Umrichter (3) einzeln jeweils einen Teilbereich (2) des der jeweiligen Steuereinrichtung (4) zugeordneten Abschnitts (1) des Linearantriebs und in ihrer Gesamtheit den jeweiligen Abschnitt (1) mit Strom (I) beaufschlagen, daurch gekennzeichnet, dass
- wobei die Steuereinrichtungen (4) jeweils gemäß einem der Ansprüche 14, 15 oder 16 ausgebildet sind und
- wobei die Steuereinrichtungen (4) über ihre peer-to-peer-Schnittstellen (5) in jeweils mit einer Anzahl von anderen Abschnitte (1) steuernden Steuereinrichtungen (4) verbunden sind.

## Claims

1. Control method for a linear drive,
- wherein a plurality of sequentially consecutive sections (1) of the linear drive are controlled in each case by a control device (4) which is assigned to the respective section (1),
- wherein converters (3) that are controlled by the respective control device (4) apply current (I) individually in each case to a subsection (2) of the respective section (1), and collectively to the respective section (1),
- wherein the control devices (4) specify new desired values (I*) in each case to the converters (3) they control,
- the respective control device (4) controls a plurality of converters (3) of the respective section in each case, **characterised in that**
- the control devices (4) communicate, via respective peer-to-peer interfaces (5) having real-time capability, with a number of other control devices (4) which control sections (1), and
- the control devices (4) specify the desired values (I*) to the converters (3) they control in a current-regulator clock cycle, that the control devices (4) communicate with each other via the peer-to-peer interfaces (5) in a communication clock cycle, and that the communication clock cycle is identical to the current-regulator clock cycle or is a whole-number multiple of the current-regulator clock cycle.

2. Control method according to claim 1
**characterised in that**
the respective control device (4) is connected via its respective peer-to-peer interfaces (5) to those control devices (4) which control the sections (1) that are immediately adjacent in each case.

3. Control method according to claim 1 or 2,
**characterised in that**
the respective control device (4) and the converters (3) it controls are combined to form a group of proximately disposed modules (M).

4. Control method according to claim 1,
**characterised in that**
the control devices (4) communicate with a supervisory control device (9) via a respective further interface (10) in a control clock cycle, and that the control clock cycle is longer than the communication clock cycle.

5. Control method according to one of the previous claims,
**characterised in that**
the peer-to-peer interfaces (5) work using Ethernet physics.

6. Control method according to one of the previous claims,
**characterised in that**
on the basis of the communication between the control devices (4), those control devices (4) which control two sections (1) that are immediately adjacent to each other have a temporary master-slave relationship.

7. Control method according to claim 6,
**characterised in that**
the master-slave relationship is established when an element (12), which is transported by means of the linear drive, is transported from one of the two sections (1) that are immediately adjacent to each other to the other of the two sections (1) that are immediately adjacent to each other, and that the master-slave relationship is maintained until the transported element (12) has been transported from the one of the two sections (1) that are immediately adjacent to each other to the other of the two sections (1) that are immediately adjacent to each other.

8. Control method according to claim 7,
**characterised in that**
the control device (4) from whose section (1) the transported element (12) is transported into the immediately adjacent section (1) declares itself as the master of the control device (4) for that section (1) into which the transported element (12) is transported.

9. Control method according to one of the previous claims,
**characterised in that**
work carriers (12) are transported and positioned by means of the linear drive.

10. Computer program comprising machine code (8) which can be executed by a control device (4) for a section (1) of a linear drive, wherein the execution of the machine code (8) by the control device (4) causes the control device (4) to specify new desired values (I*) in each case to converters (3) it controls, to control a plurality of converters (3) of the respective section, and to communicate with a number of other control devices (4) via a number of peer-to-peer interfaces (5) having real-time capability,
wherein the control devices (4) specify the desired values (I*) to the converters (3) they control in a current-regulator clock cycle, the control devices (4) communicate with one another via the peer-to-peer interfaces (5) in a communication clock cycle and the communication clock cycle is identical to the current-regulator clock cycle or is a whole-number multiple of the current-regulator clock cycle.

11. Computer program according to claim 10,
**characterised in that**
the execution of the machine code (8) by the control device (4) causes the control device (4) to specify the desired values (I*) to the converters (3) it controls in a current-regulator clock cycle, that the control device (4) communicates with the number of other control devices (4) via the peer-to-peer interfaces (5) in a communication clock cycle, and that the communication clock cycle is identical to the current-regulator clock cycle or is a whole-number multiple of the current-regulator clock cycle.

12. Computer program according to claim 11,
**characterised in that**
the execution of the machine code (8) by the control device (4) causes the control device (4) to communicate with a supervisory control device (9) via a further interface (10) in a control clock cycle, and that the control clock cycle is longer than the communication clock cycle.

13. Computer program according to claim 10, 11 or 12,
**characterised in that**
the execution of the machine code (8) by the control device (4) causes the control device (4) to have a temporary master-slave relationship with one of the other control devices (4) on the basis of the communication with this control device (4).

14. Control device for a section (1) of a linear drive,
- wherein current (I) is applied by means of a plurality of converters (3) controlled by the control device (4) individually in each case to a subsection of the respective section and collectively to the respective section
- wherein new desired values (I*) are specified in each case to the converters it controls by the control device (4), **characterized in that** wherein the control respectively of a plurality of converters (3) of the respective section is carried out by means of the control device (4),
- the communication of the control device (4) with a number of control devices controlling other sections is carried out via respective peer-to-peer interfaces (5) having real-time capability,
- wherein the desired values (I*) are specified by means of the control device (4) to the control devices of other sections via the peer-to-peer interfaces (5) having real-time capability in a current-regulator clock cycle to the controlled converters of the respective section in a communication clock cycle, which is identical to the current-regulator clock cycle or is a whole-number multiple of the current-regulator clock cycle.

15. Control device according to claim 14,
**characterised in that**
the control device and the converters (3) it controls are combined to form a group of modules (M) disposed in immediate proximity.

16. Control device according to claim 14 or 15,
**characterised in that**
the peer-to-peer interfaces (5) work using Ethernet physics.

17. Linear drive,
- wherein the linear drive has a plurality of sequentially consecutive sections (1), these being controlled in each case by a control device (4) that is assigned to the respective section (1),
- wherein converters (3) that are controlled by the respective control device (4) apply current (I) individually in each case to a subsection (2) of that section (1) of the linear drive which is assigned to the respective control device (4), and collectively to the respective section (1), **characterised in that**
- wherein the control devices (4) are in each case designed in accordance with one of the claims 14, 15 or 16, and
- wherein the control devices (4) are in each case connected via their peer-to-peer interfaces (5) to a number of control devices (4) controlling other sections (1).

## Revendications

1. Procédé de commande pour un entraînement linéaire,
- plusieurs sections (1) séquentiellement successives de l'entraînement linéaire étant commandées chaque fois par un appareil de commande (4) associé à la section respective (1),
- des variateurs (3) commandés par l'appareil de commande (4) respectif alimentant en courant (I) séparément chaque fois une zone partielle (2) de la section (1) respective et, dans sa totalité, la section (1) respective,
- les appareils de commande (4) déterminant aux variateurs (3) commandés par eux, chaque fois de nouvelles valeurs théoriques (I*),
- l'appareil de commande (4) respectif commandant chaque fois une pluralité de variateurs (3) de la section respective, **caractérisé en ce que**
- les appareils de commande (4) communiquent avec un nombre d'appareils de commande (4) commandant d'autres sections (1) par le biais d'interfaces d'égal à égal (5) respectives en temps réel, et
- les appareils de commande (4) prédéterminent les valeurs théoriques (I*) à une cadence de régulateur de courant aux variateurs (3) commandés par eux, de sorte que les appareils de commande (4) communiquent par le biais des interfaces d'égal à égal (5) à une cadence de communication les uns avec les autres et que la cadence de communication est identique à la cadence du régulateur de courant ou est un multiple entier de la cadence du régulateur de courant.

2. Procédé de commande selon la revendication 1,
**caractérisé en ce que**
l'appareil de commande (4) respectif est raccordé par le biais de ses interfaces d'égal à égal (5) respectives aux appareils de commande (4) commandant les sections (1) directement contiguës respectives.

3. Procédé de commande selon la revendication 1 ou 2,
**caractérisé en ce que**
l'appareil de commande (4) respectif et les variateurs (3) commandés par lui sont rassemblés en un groupe de modules (M) disposés les uns à côté des autres.

4. Procédé de commande selon la revendication 1,
**caractérisé en ce que**
les appareils de commande (4) communiquent par le biais d'une autre interface (10) respective avec un appareil de commande (9) supérieur à une cadence de commande et **en ce que** cette cadence de commande est plus élevée que la cadence de communication.

5. Procédé de commande selon l'une des revendications ci-dessus,
**caractérisé en ce que**
les interfaces d'égal à égal (5) fonctionnent avec une physique Ethernet.

6. Procédé de commande selon l'une des revendications ci-dessus,
**caractérisé en ce que**,
en raison de la communication des appareils de commande (4) les uns avec les autres, deux appareils de commande (4) commandant des sections (1) directement contiguës l'une à l'autre sont mutuellement et temporairement dans une relation maître-esclave.

7. Procédé de commande selon la revendication 6,
**caractérisé en ce que**
la relation maître-esclave est instaurée quand un élément (12) transporté au moyen de l'entraînement linéaire est transporté d'une des deux sections (1) directement contiguës l'une à l'autre, à l'autre des deux sections (1) directement contiguës l'une à l'autre, et **en ce que** la relation maître-esclave est maintenue jusqu'à ce que l'élément transporté (12) soit transporté de l'une des deux sections (1) directement contiguës l'une à l'autre, à l'autre des deux sections (1) directement contiguës l'une à l'autre.

8. Procédé de commande selon la revendication 7,
**caractérisé en ce que**
l'appareil de commande (4) de la section (1) duquel l'élément transporté (12) est transporté dans la section (1) directement contiguë, est réputé maître de l'appareil de commande (4) de la section (1) dans laquelle l'élément (12) transporté est transporté.

9. Procédé de commande selon l'une des revendications ci-dessus,
**caractérisé en ce que**,
au moyen de l'entraînement linéaire, des supports de pièces à usiner (12) sont transportés et positionnés.

10. Programme informatique comprenant un code machine (8) qui peut être exécuté par un appareil de commande (4) pour la section (1) d'un entraînement linéaire, l'exécution du code machine (8) par l'appareil de commande (4) faisant en sorte que l'appareil de commande (4) prédétermine aux variateurs (3) commandés par lui chaque fois de nouvelles valeurs théoriques (I*), commande une pluralité de variateurs (3) de la section respective et communique par le biais d'un nombre d'interfaces d'égal à égal (5) en temps réel avec un nombre d'autres appareils de commande (4), les appareils de commande (4) prédéterminant les valeurs théoriques (I*) à une cadence du régulateur de courant aux variateurs (3) commandés par eux, les appareils de commande (4) communiquant les uns avec les autres par le biais des interfaces d'égal à égal (5) à une cadence de communication et la cadence de communication étant identique à la cadence du régulateur de courant ou étant un multiple entier de la cadence du régulateur de courant.

11. Programme informatique selon la revendication 10,
**caractérisé en ce que**
l'exécution du code machine (8) par l'appareil de commande (4) fait en sorte que l'appareil de commande (4) prédétermine les valeurs théoriques (I*) à une cadence du régulateur de courant aux variateurs (3) commandés par lui, que l'appareil de commande (4) communique par le biais des interfaces d'égal à égal (5) avec le nombre d'autres appareils de commande (4) à une cadence de communication et que la cadence de communication est identique à la cadence du régulateur de courant ou est un multiple entier de la cadence du régulateur de courant.

12. Programme informatique selon la revendication 11,
**caractérisé en ce que**
l'exécution du code machine (8) par l'appareil de commande (4) fait en sorte que l'appareil de commande (4) communique par le biais d'une autre interface (10) avec un appareil de commande (9) supérieur à une cadence de commande et que la cadence de commande est plus élevée que la cadence de communication.

13. Programme informatique selon la revendication 10, 11 ou 12,
**caractérisé en ce que**
l'exécution du code machine (8) par l'appareil de commande (4) fait en sorte que l'appareil de commande (4) est, en raison de la communication avec l'un des autres appareils de commande (4) temporairement avec cet appareil de commande (4), dans une relation maître-esclave.

14. Appareil de commande pour la section (1) d'un entraînement linéaire,
- l'alimentation en courant (I) s'effectuant par la pluralité de variateurs (3) commandée par l'appareil de commande (4) séparément chaque fois dans une zone partielle de la section respective et dans sa totalité de la section respective,
- la prédétermination chaque fois de nouvelles valeurs théoriques (I*) s'effectuant par l'appareil de commande (4) aux variateurs commandés par lui,
**caractérisé en ce que**
la commande chaque fois d'une pluralité de variateurs (3) de la section respective s'effectue par l'appareil de commande (4),
- la communication de l'appareil de commande (4) avec un nombre d'autres appareils de commande commandant des sections s'effectue par le biais d'interfaces (5) d'égal à égal respectives en temps réel;
- la prédétermination des valeurs théoriques (I*) par l'appareil de commande (4) aux appareils de commande d'autres sections s'effectuant par le biais des interfaces (5) d'égal à égal en temps réel à une cadence du régulateur de courant aux variateurs commandés de la section respective à une cadence de communication qui est identique à la cadence du régulateur de courant ou qui est un multiple entier de la cadence du régulateur de courant.

15. Appareil de commande selon la revendication 14,
**caractérisé en ce que**
l'appareil de commande et les variateurs (3) commandés par lui sont rassemblés en un groupe de modules (M) disposés directement les uns à côté des autres.

16. Appareil de commande selon la revendication 14 ou 15,
**caractérisé en ce que**
les interfaces d'égal à égal (5) fonctionnent avec une physique Ethernet.

17. Entraînement linéaire,
- l'entraînement linéaire présentant plusieurs sections (1) séquentiellement successives, qui sont commandées respectivement par un appareil de commande (4) associé à la section respective (1),
- des variateurs (3) commandés par l'appareil de commande (4) respectif alimentant en courant (I) séparément chaque fois une zone partielle (2) de la section (1) associée à l'appareil de commande (4) respectif de l'entraînement linéaire et, dans sa totalité, la section (1) respective,
**caractérisé en ce que**
- les appareils de commande (4) sont configurés chaque fois selon l'une des revendications 14, 15 ou 16 et
- les appareils de commande (4) sont connectés par le biais de leurs interfaces d'égal à égal (5) à chaque fois un nombre d'autres appareils de commande (4) commandant des sections (1).
